# EUROPEAN PATENT APPLICATION

(11) **EP 2 889 274 A1**
(43) Date of publication of application: **01.07.2015**
(21) Application number: 14191570.2
(22) Date of filing: 04.11.2014
(51) Int. Cl.: C03B 5/04, C03B 5/20, C03B 5/225, C03B 5/235

(54) **Energy-efficient and environmentally-friendly method for producing glass, and glass melting furnace**

(30) Priority: 24.12.2013 CN 201310730849
(71) Applicant: Xiao, Zijiang, Beijing 100082 (CN)
(72) Inventor: Xiao, Zijiang, Beijing 100082 (CN)
(74) Representative: Beetz & Partner mbB

(57) **Abstract**

The present invention relates to a glass melting furnace comprising:
a melting tank (1) with
- a first melting segment (11a), with at least one charge feeding port (2a), at least one burner (4a) together with a small furnace, a tail gas outlet and a heat storage chamber (5a), and
- a first bubble exhaust and clarification segment (12a) with at least one discharge port (14a) for the molten glass,
- a second melting segment (11b), with at least one charge feeding port (2b), at least one burner (4b) together with a small furnace, a tail gas outlet and a heat storage chamber (5b), and
- a second bubble exhaust and clarification segment (12b) with at least one discharge port (14b) for the molten glass,
wherein all segments (11a, 12a, 12b, 11b) are arranged along a straight line, the first and the second bubble exhaust and clarification segments (12a, 12b) side by side, separated by a transverse partition wall (9), and wherein
the burners (4a, 4b) are arranged at the end walls of the first and second melting segments (11a, 11b) emitting alternatingly long flames in the longitudinal direction of said straight line.

## Description

### BACKGROUND

### Technical Field

The present invention relates to a method and an apparatus for producing glass, and particularly, to an energy-efficient and environmentally-friendly method for producing glass, and a glass melting furnace.

### Related Art

A conventional melting furnace for producing glass is a horseshoe-flame furnace. However, the inventor discovers through research that the horseshoe-flame furnace has problems of high energy consumption, dust pollution of raw materials, and the like.

### SUMMARY

An objective of the present invention is to overcome the foregoing defects in the prior art, and provide an energy-efficient and environmentally-friendly method for producing glass. The present invention further relates to a glass melting furnace used for implementing the method.

To achieve the foregoing objective, in an energy-efficient and environmentally-friendly method for producing glass according to the present invention, a long and longitudinal flame is used to melt and heat frit in a melting tank of a melting furnace, where the flame changes a direction regularly and is generated by small furnaces and burners and a heat storage chamber having a reversing component (or a reversing valve) that are disposed at each of two narrow-side breast walls of a longitudinally-long-and-transversely-short rectangular melting furnace, and one discharging port is disposed or two opposite discharging ports are disposed at the middle part of long sides of the melting tank to supply molten glass to a glass molding line; a reinforced heat insulation melting tank bottom is used to achieve energy efficiency and ensure quality of molten glass; two transverse partition walls are disposed at the middle part of the melting tank to stop molten glass from directly flowing into the middle part of the melting tank, dog-holes located under each transverse partition wall and connecting molten glass flow at tank bottoms at two sides of each transverse partition wall are used to guide the molten glass to flow to the middle part of the melting tank, so as to ensure quality of the molten glass at the middle part of the melting tank, and the two transverse partition walls block scrum in molten glass out in melting areas outside the transverse partition walls; and end-type feeding ports are disposed at two ends of each of two long-side breast wall of the rectangular melting furnace, and a distance between the discharging port and the corresponding feeding port is lengthened, so that the molten glass is molten sufficiently and uniformly. Further, a melting area may be increased, a melting temperature is further decreased, and a mass output rate is further increased. In this design, because the flame has a long path and does not need to bend, it is avoided that the flame keeps burning the breast walls, so that heat transferring is uniform, heat efficiency is high, energy consumption can be greatly reduced, a service life can be greatly lengthened, and quality of glass can be greatly improved, which is beneficial to a yield of float glass.

Preferably, two diagonally distributed end-type feeding ports or four opposite and parallel feeding ports in all are disposed at two ends of two long-side breast walls of the rectangular melting furnace to improve feeding efficiency and productivity; a transverse separation wall is disposed at the middle of the melting tank to separate the melting tank between the two transverse partition walls into two sub-melting tanks for melting different frit, so as to achieve two productions in one tank; and the depth of the middle area, between the transverse partition walls, of the melting tank is less than the depths of two end areas, outside the transverse partition walls, of the melting tank, so that bubbles in molten glass flowing into the middle area of the melting tank are exhausted sufficiently. The float glass molding line is a production line in which molten glass flows from the furnace to a molten metal surface and floats on the molten metal surface, to form a smooth glass ribbon having a uniform thickness and polished by fire, after the molten glass is cooled and hardened, the glass is separated from the molten metal, and the glass is annealed and cut into transparent and colorless sheet glass. Preferably, an interval between the two transverse partition walls is less than an interval between each transverse partition wall and each corresponding narrow side of the melting tank; and the discharging port is connected to the float glass molding line by using a clarification and cooling chamber.

Preferably, the reinforced heat insulation of the melting tank bottom is implemented by using a hierarchical structure of the tank bottom, in which an electric melting brick layer, a ramming material layer, a high-alumina brick layer, a clay brick layer, and a heat insulation brick are disposed from top to bottom in sequence; the feeding ports are flared feeding ports having a broad front end and a narrow back end, which helps implement thin-layer charging and bring a flame into the feeding ports to preheat a surface of the frit, and an electric heating premelting device is disposed, so that the frit is premolten in the feeding ports; the transverse separation wall is a straight-line transverse separation wall or a curved transverse separation wall, of which two ends directly reach sides of the melting tank. The flared feeding ports can further premelt the frit, so as to prevent blocking of the feeding port and improve melting efficiency and use intensity of the flame. The electric heating premelting device disposed in the feeding port can ensure that surfaces of raw materials entering the furnace are in a molten state, thereby preventing dust pollution; the clarification and cooling chamber is a rectangular molten glass tank being upwardly open, which has an inner end connected to the discharging port and an outer end connected to a main material path or the glass molding line, where a hierarchical structure of the rectangular molten glass tank from inside to outside is the electric melting brick layer, the ramming material layer, the high-alumina brick layer, the clay brick layer, and the heat insulation brick layer in sequence.

Preferably, during the premelting, a silicon carbide rod is placed on a material layer to radiate heat to the surface of the frit, so as to melt the surface of the frit, thereby preventing dust pollution; the curved transverse separation wall is a transverse separation wall having two ends connected to the melting tank by using symmetric corner parts, and dog-holes are disposed under a middle segment, in parallel with a middle segment of the transverse separation wall except two corner parts, of each transverse partition wall.

Preferably, two ends of the transverse separation wall are connected to two sides at the middle part of the melting tank to separate the melting tank between the two transverse partition walls into a front sub-melting tank and a back sub-melting tank, two longitudinal corner parts extending from the two ends of the transverse separation wall are separately connected to the two transverse partition walls to separate the middle part of the melting tank between the two transverse partition walls into left sub-melting tanks and right sub-melting tanks, each longitudinal corner part of the corner-type transverse separation wall separates each transverse partition wall into a short segment and a long segment, there are two or more than two parallel dog-holes, which are both disposed under the long segments of the transverse partition walls; during the premelting, a silicon carbide rod is placed on a material layer to radiate heat to the surface of the frit, so as to melt the surface of the frit, thereby preventing dust pollution; multi-path discharging at the middle part of the long sides of the melting tank is that: two opposite discharging ports, which not only can increase the yield but also can ensure quality of the molten glass, are disposed at two sides at the middle parts of the long sides of the melting tank. The distance between the two transverse partition walls is less than distances between the transverse partition walls and corresponding narrow sides of the melting tank, and the premelting process and the premelting capability are improved before the molten glass passes through the transverse partition wall, so as to increase the productivity.

A glass melting furnace used for implementing the method according to the present invention includes: a melting tank; a furnace top; and breast walls that connect the furnace top and the melting tank, feeding ports, and a discharging port; and small furnaces and burners and heat storage chambers having reversing components, disposed in the breast walls, where the small furnaces and burners and the heat storage chamber having the reversing component are disposed on each of two opposite narrow-side breast walls of a longitudinally-long-and-transversely-short rectangular melting furnace, and the small furnaces and the heat storage chamber can generate a flame that changes its direction regularly, to melt and heat frit in a melting tank of a melting furnace; the distance between the discharging port and the corresponding feeding port is lengthened, so that molten glass is molten sufficiently and uniformly, the discharging port for supplying the molten glass to a float glass molding line is disposed at the middle part of the long sides of the melting tank, and end-type feeding ports that can improve feeding efficiency and productivity are disposed at two ends of two long-side breast walls of the rectangular melting furnace; and two transverse partition walls are disposed at the middle part of the melting tank to stop the molten glass from directly flowing into the middle part of the melting tank, and dog-holes that connect a molten glass flow at the tank bottom at two sides of the transverse partition wall and can ensure quality of molten glass flowing into the middle part of the melting tank are disposed in each transverse partition wall. The melting area may be further increased, the melting temperature may be further decreased, and the mass output rate may be further increased.

Preferably, a melting tank bottom is a reinforced heat insulation tank bottom having combined layers that is beneficial to energy efficiency and ensures quality of molten glass; two diagonally distributed end-type feeding ports or four opposite and parallel end-type feeding ports in all that can improve feeding efficiency and productivity are disposed at two ends of two long-side breast walls of the rectangular melting furnace; single-path discharging or multi-path discharging is used at the middle part of the long sides of the melting tank; a transverse separation wall is disposed at the middle part of the melting tank to separate the melting tank between the two transverse partition walls into two sub-melting tanks for melting different frit; the depth of the middle area, between the transverse partition walls, of the melting tank is less than the depths of the two end areas, outside the transverse partition walls, of the melting tank, so that bubbles in molten glass flowing into the middle area of the melting tank are exhausted sufficiently; flared feeding ports can premelt frit, so as to prevent blocking of the feeding ports and improve melting efficiency and flame use strength. The electric heating premelting device disposed in the feeding ports can ensure that surfaces of raw materials entering the furnace are in a molten state, so as to prevent dust pollution. A float glass molding line is a production line in which molten glass flows from the furnace to a molten metal surface and floats on the molten metal surface, to form a smooth glass ribbon having a uniform thickness and polished by fire, after the molten glass is cooled and hardened, the glass is separated from the molten metal, and the glass is annealed and cut into transparent and colorless sheet glass. Preferably, the distance between the transverse partition walls is less than the distances between the transverse partition walls and corresponding narrow sides of the melting tank; and the discharging port is connected to the float glass molding line by using a clarification and cooling chamber.

Preferably, a caliber of the dog-hole away from the discharging port is greater than a caliber of the dog-hole close to the discharging port, so that the quantity of flow of each dog-hole is similar, thereby ensuring uniform quality of glass; depths of two end areas, outside the transverse partition walls, of the melting tank are about 0.7 to 1.1 m, and the depth of the middle area, between the transverse partition walls, of the melting tank is about 0.2-0.6 m, so that a depth difference or a pressure difference of molten glass between the two areas is increased, thereby strengthening a bubble releasing strength in the middle area of the melting tank; an interval of about 5 cm is disposed between the top of the transverse partition wall and a surface of molten glass and between the top of the transverse separation wall and a surface of molten glass, so that molten glass can be blocked and the longitudinal flame can pass successfully; the electric heating premelting device further includes a molybdenum electrode that is disposed inside the frit layer and can prevent blocking of the feeding port through premelting; the depth of the melting tank is about 0.2-1.1 m, and a longitudinal length of the rectangular melting furnace built above the melting tank is 20-120 m; the curved transverse separation wall is formed by a middle segment in parallel with the transverse partition walls, two end segments, and two longitudinal segments connecting the two end segments and the middle segment, two ends of the middle segment are connected to the two end segments by using the longitudinal segments, and the two end segments are connected to sides of the melting tank; one discharging port is disposed at one side, opposite to each longitudinal segment, of the melting tank; the dog-hole close to the discharging port is smaller than the dog-hole away from the discharging port; a hierarchical structure of a part, between the longitudinal segments and the transverse partition wall, of the melting tank bottom includes the electric melting brick layer, the ramming material layer, the high-alumina brick layer, the clay brick layer, and the heat insulation brick layer, from top to bottom in sequence; and sides of the melting tank, the transverse partition walls, and the transverse separation wall have a same height.

In the energy-efficient and environmentally-friendly method for producing glass according to the present invention, (for the melting furnace part) a longitudinally-long-and-transversely-short rectangular melting furnace is used; small furnaces, a combustion system, a heat storage chamber, and a reversing component are disposed at each of two narrow-side breast walls; a melting furnace using a longitudinal flame that inverts its direction regularly is used; a long and longitudinal flame is used to heat and melt frit of glass in the melting furnace tank; three walls are disposed transversely in the melting furnace, so that the melting tank is partitioned into four tanks; one cooling tank is disposed on each side of transverse middle parts of the melting furnace. Molten glass is taken from the cooling tank to be molded, and multiple feeding ports are disposed at two ends of each long-side breast wall of the rectangular melting furnace, so as to achieve objectives of energy efficiency, environmental protection, good quality, lengthening a service life of the melting furnace, and more productions in one furnace.

A conventional transverse flame furnace (the travel length of the transverse flame is about 6 m to 16 m, and the flame stays in the melting tank for about one second) is changed to a longitudinal flame furnace. The travel length of the longitudinal flame is about 20 m to 130 m, and (the length of the flame is determined according to the discharging quantity of the melting furnace required by the customer) the flame stays in the melting tank for about seven seconds, so that heat energy is used sufficiently, and energy is saved by about 25% compared with the transverse flame furnace. A tank bottom of a conventional float glass furnace is thin (about 0.5 m) and is not heat-insulated. In the melting furnace according to the present invention, reinforced heat insulation (over 1 m) is used in the tank bottom, and is implemented by using a hierarchical structure of the tank bottom, in which an electric melting brick layer, a ramming material layer, a high-alumina brick layer, a clay brick layer, and a heat insulation brick are disposed from top to bottom in sequence. Compared with the conventional transverse flame furnace, of which the tank bottom is not heat-insulated, energy is saved by about 5%. Therefore, compared with the conventional melting furnace, the new melting furnace in the present invention can save energy by about 30%.

Multiple flared thin-layer feeding ports having a broad front end and a narrow back end are disposed at ends of two long-side breast walls of the rectangular melting furnace; the flared structure enables the temperature inside the melting furnace tank to be radiated to the feeding ports; molybdenum electrodes are disposed inside the frit layer of the feeding ports to electrically heat the raw materials; silicon carbide rods are disposed on the feeding ports to premelt the surface of the raw materials, so that no dust pollution of the frit exists basically, and emission of dust pollutants is reduced by about 95%. Energy saving by about 30% means that emission of carbon dioxide and sulfur dioxide is reduced by about 30%, and emission of dust pollutants is reduced by about 95%.

Three transverse walls are disposed at the middle part of the melting tank to partition the rectangular melting tank into four tanks, one high-temperature melting tank is disposed at each end and each side, and one bubble exhaustion tank is disposed at each side of a middle part of the rectangular melting tank. One big dog-hole (90% of the materials pass) and one small dog-hole (10% of the materials pass) are disposed in each transverse partition wall. In one aspect, scrum is blocked out in melting areas, and in another aspect, 90% of the materials are away from the discharging port; and in the shallow area having small pressure, bubbles in molten glass are exhausted sufficiently. The small dog-hole (10% of the materials pass) enables that no dead mass exists in the two melting areas, thereby greatly improving quality of the molten glass. The function of the three transverse partition walls is that: in one aspect, the flowing direction of molten glass can be controlled, and bubbles are exhausted sufficiently; in another aspect, the melting furnace is partitioned into two melting tanks, so that two types of products having similar raw materials can be produced. Heights of the three transverse partition walls are the same as the height of bricks (electric melting brick) at the tank walls of the melting tank, so that not only the molten glass can be blocked, but also the longitudinal flame can pass longitudinally and successfully in the melting furnace.

The flame stays in the melting furnace for a longer time, so that heat energy is consumed, and a temperature of the flame entering the heat storage chamber is about 1000 degrees Celsius, which is 300 degrees Celsius lower than the temperature of the transverse flame in the heat storage chamber; therefore the heat storage chamber has a lower temperature, leading to a longer service life. According to the present invention, a melting area is broad, and the mass output rate is high. The melting temperature is designed to be about 1520 degrees Celsius, which can enable the service life (about 15 years) of the melting furnace to double the service life of the conventional melting furnace (having the same material).

One cooling tank is disposed at each side of a middle part of the melting tank, and the molten glass is cooled and then poured through the discharging port. Only one discharging port is disposed at the middle part of the long side of the melting tank or one discharging port is disposed at the middle part of each long side of the melting tank, so as to implement single-path production in one furnace or multi-path production in one furnace, and two products (having similar chemical components) can be produced in one furnace.

In the present invention, a conventional transverse flame furnace is changed to a longitudinal flame furnace, and a depth of the melting tank is changed to have a deep area and a shallow area and the deep area and the shallow area are separated; a method of taking materials from a dog-hole is used, reinforced heat insulation is used in the bottom, feeding by using a premelting method at two transverse ends is used, and transversely, single-path pouring at the middle part and multi-path pouring at two sides are used, the melting area is increased, a melting temperature is decreased, and the mass output rate is increased. Compared with the horseshoe-type melting furnace, energy is saved by over 30%, emission of CO₂ and SO₂ is reduced by about 30%, and emission of particles and dust of raw materials is reduced by over 95%, so that quality of float glass is improved greatly, the service life of the melting furnace is tripled, the quality of glass is improved greatly, and no bubble or thread exists in the glass.

When the foregoing technical solutions are used, the energy-efficient and environmentally-friendly method for producing float glass and a glass melting furnace according to the present invention have the following advantages: the use rate of the flame is improved, dust pollution is reduced, the service life of a melting furnace is lengthened, and the present invention is energy-efficient and environmentally-friendly, can greatly improve quality of glass, and helps improve the yield of float glass.

### BRIEF DESCRIPTION OF THE DRAWING

The disclosure will become more fully understood from the detailed description given herein below for illustration only, and thus are not limitative of the disclosure, and wherein:

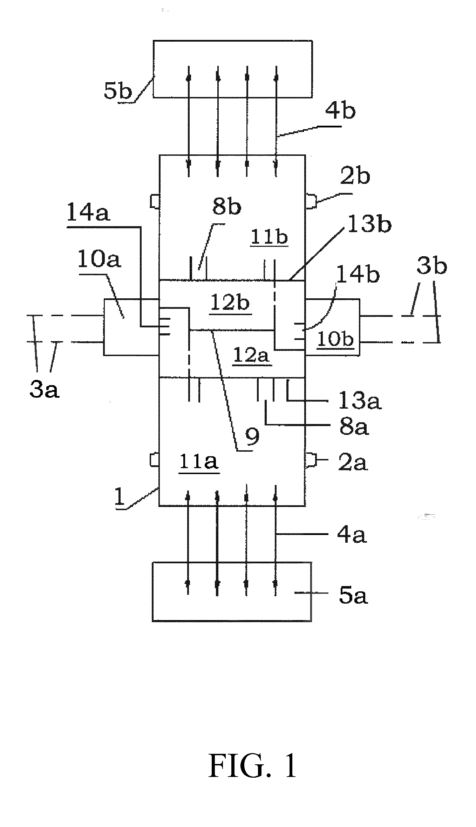

FIG. 1 is a schematic structural diagram of a glass melting furnace used for implementing an energy-efficient and environmentally-friendly method for producing float glass according to the present invention.

### DETAILED DESCRIPTION

In an energy-efficient and environmentally-friendly method for producing glass according to the present invention, a long and longitudinal flame is used to melt and heat frit in a melting tank 1 of a melting furnace, where the flame changes a direction regularly and is generated by small furnaces and burners 4a, 4b, and a heat storage room 5a, 5b having a reversing component that are disposed in each of two opposite narrow-side breast walls of a longitudinally-long-and-transversely-short rectangular melting furnace; a pair of discharging ports 14a,14b disposed at the middle part of two long sides of the melting tank 1 are used to supply molten glass to float glass molding lines by using cooling chambers 10a, 10b respectively. Four opposite and parallel feeding ports 2a, 2b are disposed at two ends of long-side breast walls of the rectangular melting furnace, so as to improve feeding efficiency and productivity (or two diagonally distributed end-type feeding ports are disposed). The float glass molding line is a production line in which molten glass continuously flows from a tank furnace to a molten metal surface and floats on the molten metal surface, to form a smooth glass ribbon having a uniform thickness and polished by fire, after the molten glass is cooled and hardened, the glass is separated from the molten metal, and the glass is annealed and cut into transparent and colorless sheet glass. The cooling chamber 10a, 10b is a rectangular molten glass tank being upwardly open, which has an inner end connected to the discharging port 14a, 14b and an outer end connected to a main material path or the float glass molding line; and a hierarchical structure of the rectangular molten glass tank from inside to outside is an electric melting brick layer, a ramming material layer, a high-alumina brick layer, a clay brick layer, and a heat insulation brick layer, in sequence.

A reinforced heat insulation melting tank bottom is used to achieve energy efficiency and ensure quality of molten glass; the reinforced heat insulation is implemented by using a hierarchical structure of the tank bottom, in which an electric melting brick layer, a ramming material layer, a high-alumina brick layer, a clay brick layer, and a heat insulation brick layer are disposed from top to bottom in sequence.

Two transverse partition walls 13a, 13b are disposed at the middle part of the melting tank 1 to stop molten glass from directly flowing into the middle part of the melting tank 1, and dog-holes 8a, 8b located in each transverse partition wall 13a, 13b and connecting a molten glass flow at tank bottoms at two sides of the transverse partition wall 13a, 13b are used to guide the molten glass to the middle part of the melting tank 1, so as to ensure quality of the molten glass at the middle part of the melting tank; two transverse partition walls block scrum in molten glass out in melting areas outside the transverse partition walls 13a, 13b; end-type feeding ports 2a, 2b are disposed at two ends of two long-side breast walls of the rectangular melting furnace, and a distance between the discharging port 3a, 3b and the corresponding feeding port 2a, 2b is lengthened, so that the molten glass is molten sufficiently and uniformly. A transverse separation wall 9 is disposed at the middle part of the melting tank 1 to separate the melting tank 1 between the two transverse partition walls 13a, 13b into two sub-melting tanks for melting different frit, so as to achieve two productions in one tank; a depth of a middle area, between the transverse partition walls, of the melting tank is less than depths of two end areas, outside the transverse partition walls 13a, 13b, of the melting tank 1, so that bubbles in molten glass flowing into the middle area of the melting tank are exhausted sufficiently. The transverse separation wall 9 is a curved transverse separation wall 9 (or a straight-line transverse separation wall); in the curved transverse separation wall 9, two ends of the transverse separation wall 9 are connected to sides of the melting tank 1 by using symmetric corner parts, and two parallel dog-holes 8a, 8b are disposed in a middle segment, in parallel with a middle segment of the transverse separation wall 9 except two corner parts, of each transverse partition wall 13a, 13b. The curved transverse separation wall 9 is formed by a middle segment in parallel with the transverse partition walls, two end segments, and two longitudinal segments connecting the two end segments and the middle segment, two ends of the middle segment are connected to the two end segments by using the longitudinal segments, and the two end segments are connected to sides of the melting tank 1; one discharging port 14a, 14b is disposed at one side, opposite to each longitudinal segment, of the melting tank 1; the dog-hole 8 close to the discharging port 14a,14b is smaller than the dog-hole away from the discharging port 14a,14b, and preferably, a proportion of a cross-sectional area of the dog-hole close to the discharging port to a cross-sectional area of the dog-hole away from the discharging port is about 1:9; a hierarchical structure of a part, between the longitudinal segments and the transverse partition wall, of the melting tank bottom includes the electric melting brick layer, the ramming material layer, the high-alumina brick layer, the clay brick layer, and the heat insulation brick layer from top to bottom in sequence; sides of the melting tank, the transverse partition walls, and the transverse separation wall have a same height, and all use an electric melting brick wall. Preferably, the distance between the transverse partition walls 13a, 13b is smaller than the distances between the transverse partition walls 13a, 13b and the corresponding narrow sides of the melting tank 1.

The feeding ports 2a, 2b are flared feeding ports having a broad front end and a narrow back end, which helps implement thin-layer charging and bring a flame into the feeding ports to preheat a surface of the frit, and an electric heating premelting device is disposed, so that the frit is premolten in the feeding port 2a, 2b; during the premelting, a silicon carbide rod is placed on a material layer to radiate heat to the surface of the frit, so as to melt the surface of the frit, thereby preventing dust pollution; during the premelting, a molybdenum electrode disposed inside the frit layer is used, so that the frit is premolten to prevent blocking of the feeding port 2a, 2b.

The dog-hole 8 away from the discharging port 14a, 14b is relatively enlarged and the dog-hole close to the discharging port 14 is relatively reduced, so that the quantity of flow in each dog-hole is similar, thereby ensuring uniform quality of glass.

The depths of two end areas, outside the transverse partition walls 13a, 13b, of the melting tank 1 are about 0.7-1.1 m and a depth of a middle area, between the transverse partition walls 13a, 13b, of the melting tank 1 is 0.2-0.6 m, so that a depth difference or a pressure difference of molten glass between the two areas is increased, thereby strengthening a bubble releasing strength in the middle area of the melting tank 1.

Preferably, an interval of about 5 cm is disposed between the top of the transverse partition wall 13a, 13b and a surface of molten glass and between the top of the transverse separation wall and a surface of molten glass, so that molten glass can be blocked and the longitudinal flame can pass successfully.

A glass melting furnace used for implementing the method in the present invention includes a melting tank 1; a furnace top; and breast walls that connect the furnace top and the melting tank, feeding ports 2a, 2b, and discharging ports 14a,14b; and small furnaces 4a, 4b and heat storage chambers 5a, 5b having reversing components, disposed in the breast walls; the small furnaces 4a, 4b and the heat storage chamber 5a, 5b having the reversing component are disposed on each of two opposite narrow-side breast walls of a longitudinally-long-and-transversely-short rectangular melting furnace, and the small furnaces 4a, 4b and the heat storage chamber 5a, 5b can generate a long and longitudinal flame inversing its direction regularly, to melt and heat frit in a melting tank of a melting furnace; the distance between the discharging ports 14a,14b and the corresponding feeding port 2a, 2b is lengthened, so that molten glass is molten sufficiently and uniformly, one discharging port 14a, 14b for supplying molten glass to one float glass molding line through one cooling chamber 10 is disposed at each middle part of two long sides of the melting tank 1, and four opposite and parallel end-type feeding ports 2a, 2b in all (or two diagonally distributed end-type feeding ports) that can improve feeding efficiency and productivity are disposed at two ends of two long-side breast walls of the rectangular melting furnace. The float glass molding line is a production line in which molten glass continuously flows from a tank furnace to a molten metal surface and floats on the molten metal surface, to form a smooth glass ribbon having a uniform thickness and polished by fire, after the molten glass is cooled and hardened, the glass is separated from the molten metal, and the glass is annealed and cut into transparent and colorless sheet glass. The cooling chamber 10a, 10b is a rectangular molten glass tank being upwardly open, which has an inner end connected to the discharging port 14a, 14b and an outer end connected to a main material path or the glass molding line; and a hierarchical structure of the rectangular molten glass tank from inside to outside is an electric melting brick layer, a ramming material layer, a high-alumina brick layer, a clay brick layer, and a heat insulation brick layer in sequence.

A melting tank bottom is a reinforced heat insulation tank bottom having combined layers that is beneficial to energy efficiency and ensures quality of molten glass; the reinforced heat insulation of the melting tank bottom is implemented by using a hierarchical structure of the tank bottom, in which an electric melting brick layer, a ramming material layer, a high-alumina brick layer, a clay brick layer, and a heat insulation brick are disposed from top to bottom in sequence; two transverse partition walls 13a, 13b are disposed at the middle part of the melting tank 1 to stop the molten glass from directly flowing into the middle part of the melting tank, and two parallel dog-holes 8 that connect a molten glass flow at the tank bottom at two sides of the transverse partition wall and can ensure quality of molten glass flowing into the middle part of the melting tank 1 are disposed in each transverse partition wall 13a, 13b; the depth of a middle area, between the transverse partition walls 13a, 13b, of the melting tank 1 is less than depths of two end areas, outside the transverse partition walls 13a, 13b, of the melting tank 1, so that bubbles in molten glass flowing into the middle part of the melting tank 1 are exhausted sufficiently; preferably, depths of two end areas, outside the transverse partition walls 13a, 13b, of the melting tank 1 are about 0.7-1.1 m, and the depth of the middle area, between the transverse partition walls 13a, 13b, of the melting tank 1 is about 0.2-0.6 m, so that a depth difference or a pressure difference of molten glass between the two areas is increased, thereby strengthening a bubble releasing strength in the middle area of the melting tank 1; a transverse separation wall 9 is disposed at the middle part of the melting tank 1 to separate the melting tank between the two transverse partition walls 13a, 13b into two sub-melting tanks for melting different frit; the transverse separation wall 9 is a curved transverse separation wall (or a straight-line transverse separation wall), of which two ends directly reach sides of the melting tank 1; in the curved transverse separation wall 9, two ends of the transverse separation wall 9 are connected to sides of the melting tank 1 by using symmetric corner parts, and two dog-holes 8 are disposed under a middle segment, in parallel with a middle segment of the transverse separation wall 9 except two corner parts, of each transverse partition wall 13a, 13b. The curved transverse separation wall 9 is formed by a middle segment in parallel with the transverse partition walls 13a, 13b, two end segments, and two longitudinal segments connecting two end segments and the middle segment, two ends of the middle segment are connected to the two end segments by using the longitudinal segments, and two end segments are connected to sides of the melting tank 1; one discharging port 14a. 14b is disposed at one side, opposite to each longitudinal segment, of the melting tank 1; the dog-hole 8 close to the discharging port is smaller than the dog-hole away from the discharging port 14, and preferably, a proportion of a cross-sectional area of the dog-hole 8 close to the discharging port to a cross-sectional area of the dog-hole away from the discharging port is about 1:9; a hierarchical structure of a bottom part, between the longitudinal segments and the transverse partition wall, of the melting tank 1 includes the electric melting brick layer, the ramming material layer, the high-alumina brick layer, the clay brick layer, and the heat insulation brick layer from top to bottom in sequence; sides of the melting tank, the transverse partition walls, and the transverse separation wall have the same height, and all use an electric melting brick wall. Preferably, the distance between the transverse partition walls is smaller than distances between the transverse partition walls and the corresponding narrow sides of the melting tank.

Furthermore, preferably, a caliber of the dog-hole 8 away from the discharging port 14a, 14b is greater than a caliber of the dog-hole close to the discharging port 14a, 14b, so that the quantity of flow of each dog-hole is similar, thereby ensuring uniform quality of glass; preferably, a depth of the melting tank is about 0.2-1.1 m, and the longitudinal length of the rectangular melting furnace built above the melting tank is 20-120 m. In addition, an interval of about 5 cm is disposed between the top of the transverse partition wall 13a, 13b and a surface of molten glass and between the top of the transverse separation wall and a surface of molten glass, so that molten glass can be blocked and the longitudinal flame can pass successfully.

The feeding ports 2a, 2b are flared feeding ports having a broad front end and a narrow back end, which helps to implement thin-layer charging and bring a flame into the feeding ports to preheat a surface of the frit, and an electric heating premelting device is configured, so that the frit is premolten in the feeding ports 2a, 2b; in the electric heating premelting device, a silicon carbide rod is placed on a material layer to radiate heat to the surface of the frit, so as to melt the surface of the frit, thereby preventing dust pollution; and the electric heating premelting device further includes a molybdenum electrode that is disposed inside the frit layer and can prevent blocking of the feeding port through premelting.

Three transverse walls 13a, 9, 13b are disposed at the middle part of the melting tank 1 to partition the rectangular melting tank 1 into four tanks, one high-temperature melting tank 11a, 11b is disposed at each end and each side, and one bubble exhaustion tank 12a, 12b is disposed at each side of a middle part of the rectangular melting tank 1. One big dog-hole 8 (90% of the materials pass) and one small dog-hole 8 (10% of the materials pass) are disposed in each transverse partition wall 13a, 13b. In one aspect, scrum is blocked out in melting areas, and in another aspect, 90% of the materials are away from the discharging port 13a, 13b, and in the shallow area having small pressure, bubbles in molten glass are exhausted sufficiently. The small dog-hole 8 (10% of the materials pass) enables that no dead mass exists in the two melting areas, thereby greatly improving quality of the molten glass. The function of the three transverse partition walls 13a, 9, 13b is that: in one aspect, the flowing direction of molten glass can be controlled, and bubbles are exhausted sufficiently; in another aspect, the melting furnace is partitioned into two melting tanks 11a, 11b, so that two types of products having similar raw materials can be produced. Heights of the three transverse partition walls 13a, 9, 13b are the same as the height of bricks (electric melting brick) at the tank walls of the melting tank 1, so that not only the molten glass can be blocked, but also the longitudinal flame can pass longitudinally and successfully in the melting furnace.

## Claims

1. A glass melting furnace comprising:
a melting tank (1) with
- a first melting segment (11a), with at least one charge feeding port (2a), at least one burner (4a) together with a small furnace, a tail gas outlet and a heat storage chamber (5a), and
- a first bubble exhaust and clarification segment (12a) with at least one discharge port (14a) for the molten glass,
**characterized by**
- a second melting segment (11b), with at least one charge feeding port (2b), at least one burner (4b) together with a small furnace, a tail gas outlet and a heat storage chamber (5b), and
- a second bubble exhaust and clarification segment (12b) with at least one discharge port (14b) for the molten glass,
wherein all segments (11a, 12a, 12b, 11b) are arranged along a straight line, the first and the second bubble exhaust and clarification segments (12a, 12b) side by side, separated by a transverse partition wall (9), and wherein
the burners (4a, 4b) are arranged at the end walls of the first and second melting segments (11a, 11b) emitting alternatingly long flames in the longitudinal direction of said straight line.

2. The glass melting furnace according to claim 1,
**characterized in that**
the first and second melting segments (11a, 11b) are separated from their respective first and second bubble exhaust and clarification segments (12a, 12b) by transverse partition walls (13a, 13b), each provided with at least one dog-hole (8a, 8b).

3. The glass melting furnace according to claim 2,
**characterized in that**
the transverse partition walls (13a, 13b) each comprise two dog-holes (8), the smaller one being closer to the discharge port (14a, 14b) than the larger one.

4. The glass melting furnace according to claim 1,
**characterized in that**
the first and the second melting segments (11a, 11b) are both straight, narrow and elongate and they are connected with the bubble exhaust and clarification segments (12a, 12b) at a narrow side, the opposite narrow side comprises the at least one burner (4a, 4b) and a small furnace emitting a long flame essentially in the direction of the longitudinal axis of the melting segments (11a, 11b).

5. The glass melting furnace according to at least one of the preceding claims,
**characterized in that**
the charge feeding ports (2a, 2b) are arranged in the elongate side walls of the melting segments (11a, 11b) close to the burners (4a, 4b).

6. The glass melting furnace according to at least one of the preceding claims,
**characterized by**
a melting tank bottom comprising
an electric melting brick layer, a ramming material layer, a high-alumina brick layer, a clay brick layer and a heat insulation brick layer, disposed from top to bottom in the above sequence.

7. The glass melting furnace according to at least one of the preceding claims,
**characterized in that**
the length of the glass melting furnace is between 20 and 120 m, its depth is about 0.7-1.1 m, and the depth of the bubble exhaust and clarification segment (12a, 12b) is between 0.2 and 0.6 m.

8. The glass melting furnace according to at least one of the preceding claims,
**characterized in that**
between the bubble exhaust and clarification segments (12a, 12b) and the discharge ports (14a, 14b) a cooling chamber (10a, 10b) is arranged, connected with the bubble exhaust and clarification segment (12a, 12b) via a dog hole (8a, 8b).

9. The glass melting furnace according to one of the preceding claims,
**characterized in that**
the discharge paths (3a, 3b) are connected to a float glass molding line.

10. The glass melting furnace according to one of the preceding claims,
**characterized in that**
at least one of the first and second bubble exhaust and clarification segments (12a, 12b) and/or one of cooling chambers(10a, 10b) are provided with more than one discharge paths (3a, 3b).

11. A method of melting glass with a glass-melting furnace according to at least one of the preceding claims,
**characterized by** the steps of:
- charging the two melting segments (11a, 11b) with frit to be molten and heating the segments (11a, 11b),
- producing a first long flame in at least one burner (4a) of the first melting segment (11a) which extends essentially in the direction of the longitudinal axis of the first and second melting segments (11a, 11b),
- extracting tail gas at the tail gas outlet of the second melting segment (11b) and guiding it into a heat storage (5b),
- pre-heating the combustion gas which is subsequently introduced in the at least one burner (4b) of the second melting segments (11b) for producing a second long flame in the second and first melting segments (11a, 11b),
- extracting the tail gas at the tail gas outlet of the first melting segment (11a) and guiding it to its heat storage chamber (5a),
- repeating the preceding steps alternately, while feeding charges of frit, melting the frit, extracting bubbles from the molten glass, cooling the molten glass and extracting the molten glass continuously.

12. The method according to claim 11,
**characterized in that**
the first and the second melting segments (11a, 11b) are charged with different sorts of frits to produce different sorts of glass.

13. The method according to claim 11 or 12,
**characterized in that**
the long flame burns within a time interval of several seconds.
